# EUROPEAN PATENT SPECIFICATION

(11) **EP 3 960 499 B1**
(45) Date of publication and mention of the grant of the patent: **26.06.2024**
(21) Application number: 19926596.8
(22) Date of filing: 10.12.2019
(51) Int. Cl.: B60C 11/00, B60C 11/01, B60C 11/03, B60C 11/12

(54) **COMPETITION WHEELCHAIR TIRE**
REIFEN FÜR EINEN WETTKAMPF-ROLLSTUHL
PNEUMATIQUE POUR FAUTEUIL ROULANT DE COMPÉTITION

(30) Priority: 26.04.2019 JP 2019086621
(43) Date of publication of application: 02.03.2022
(73) Proprietor: BRIDGESTONE CORPORATION, Chuo-ku Tokyo 104-8340 (JP)
(72) Inventor: SAHASHI, Kohei, Tokyo 104-8340 (JP)
(74) Representative: Marks & Clerk LLP
(86) International application number: PCT/JP2019/048337
(87) International publication number: WO 2020/217580

(56) References cited:
- CN-A- 109 334 353
- CN-U- 209 305 249
- JP-A- 2003 341 307
- US-B2- 7 156 407

## Description

### TECHNICAL FIELD

The present disclosure relates to a tire for wheelchairs used in various competitions, and in particular proposes a competition wheelchair tire provided with grip for the hand of a user seated in the wheelchair and with drainage performance.

### BACKGROUND

In self-propelled wheelchairs in which the wheelchair users control the movement of the tires by themselves, a hand rim coaxial with the tire is provided on the axial outer side of the tire on both sides of the chair portion, and users rotate the hand rims by hand to propel the wheelchairs by themselves.

In particular, when playing in a sports competition, such as tennis, while seated in a competition wheelchair, athletes must quickly react and change their behavior as the game unfolds, both quickly changing their own position and making minute adjustments to their position. The athletes therefore need to touch the tires directly with their hands and control the movement of the wheelchair at the appropriate timing for pushing and braking of the wheelchair. Attention is drawn to the disclosures of CN109334353A and JP2003-341307A.

### CITATION LIST

### Patent Literature

PTL 1: US7156407B2

### SUMMARY

### (Technical Problem)

Here, if the tire has a raised portion, an athlete's hand may be injured by the edge of the raised portion or the like when the hand directly touches the tire. To prevent the athlete's hand from being injured, the wheelchair tire described in Patent Literature (PTL) 1, for example, is provided with a smooth, even surface in the area where the hand touches.

With a competition wheelchair, however, it is necessary to rotate the tires so that the wheelchair moves from a stopped state to a fast speed when pushing, and to stop the rotation of the tires abruptly when braking. Better grip is thus required between the athlete's hands and the tires. At such times, the wheelchair tire of PTL 1, with no uneven surface properties whatsoever, has insufficient grip for the user's hand.

Furthermore, in the competition wheelchair tire of PTL 1, no consideration is given to drainage performance for draining the tire when a water film is present in the contact patch. For example, a competition wheelchair tire that is used in outdoor sports such as tennis is also used on wet ground or grass courts after it rains. If a water film is present in the contact patch at this time, the water film comes between the tire and the contact patch, preventing the tire from making contact with the ground. This results in slippage, adversely affecting the competition. In order to prevent such tire slippage, the tire needs to have drainage performance to drain water adhered to the tire.

It is therefore an aim of the present invention to provide a competition wheelchair tire with grip for the hand of an athlete and drainage performance, without injuring the hand.

### (Solution to Problem)

We carefully studied how to solve the aforementioned problem. Upon studying the contact region with the contact patch of a competition wheelchair tire and the contact region with the hand in detail, we discovered that modifying the surface properties of the contact region with the contact patch together with those of the contact region with the hand can achieve grip for the hand and drainage performance, thereby completing the present invention.

We provide the following.

A competition wheelchair tire including:
in regions, divided by a tire equator, on both sides of a tread surface of a tire,
a grip area along an entire circumference of a tread, the grip area including a plurality of recessed lines, with a shape recessed toward an inner side of the tire from an outline of the tread surface, that extend from a tread edge side in a direction inclined relative to the tire equator and are arrayed in parallel; and
in each region, a recessed portion defined by two lines, extending radially towards the grip area from a point positioned in a direction of the grip area from the tire equator, and a line connecting tips of the two lines.

The "tread edge" is the outer edge in the width direction of the formation region of the tread pattern, which is formed according to the requirements of each wheelchair tire.

Unless otherwise stated, the positions and dimensions refer to those in the state of the product tire.

### (Advantageous Effect)

According to the present invention, a competition wheelchair tire that achieves grip for the hand of an athlete and drainage performance, without injuring the hand, can be provided.

### BRIEF DESCRIPTION OF THE DRAWINGS

In the accompanying drawings:
FIG. 1A is a diagram illustrating a portion of a tire according to a first embodiment of the present invention, developed in the tread width direction, and FIG. 1B is a schematic cross-sectional view along line II-II of FIG. 1A;
FIG. 2A is a cross-sectional view along line III-III of FIG. 1A;
FIG. 2B is a cross-sectional view along line III-III of FIG. 1A;
FIG. 3A is an enlarged view of a recessed portion of FIG. 1A;
FIG. 3B is a diagram illustrating a variation of the recessed portion;
FIG. 3C is a diagram illustrating a variation of the recessed portion;
FIG. 3D is a diagram illustrating a variation of the recessed portion;
FIG. 3E is a diagram illustrating a variation of the recessed portion;
FIG. 4A is a cross-sectional view along a line segment t1 of FIG. 3A;
FIG. 4B is a cross-sectional view along the line segment t1 of FIG. 3A;
FIG. 5 is a diagram illustrating a portion of a tire according to a second embodiment of the present invention, developed in the tread width direction;
FIG. 6 is an enlarged view of a portion of a grip area in FIG. 5;
FIG. 7 is a diagram illustrating a portion of a tire according to a third embodiment of the present invention, developed in the tread width direction; and
FIG. 8 is a diagram illustrating a portion of a tire according to a fourth embodiment of the present invention, developed in the tread width direction.

### DETAILED DESCRIPTION

### (First Embodiment)

Exemplary embodiments of a competition wheelchair tire according to the present invention (also referred to below simply as a "tire") are described below in detail with reference to the drawings.

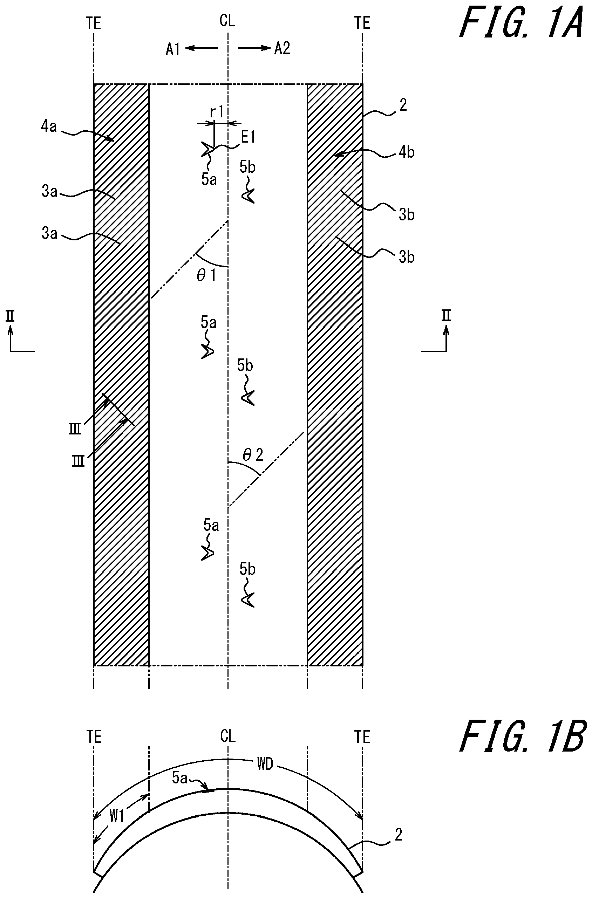

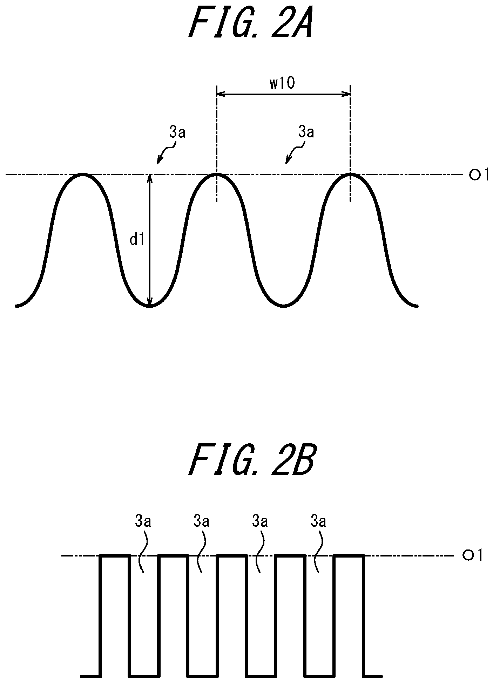

FIG. 1A is a diagram illustrating a portion of a tread surface 2 of a tire 1 according to a first embodiment of the present invention, developed in the tread width direction, and FIG. 1B is a schematic cross-sectional view along line II-II of FIG. 1A. FIG. 2A is a cross-sectional view along line III-III of FIG. 1A. Although the internal structure of the tire 1 is not limited and is omitted from the drawings, from the viewpoint of durability, the tire 1 preferably includes a carcass, as a framework, extending between a pair of bead portions, and a tread on the outer side of the carcass in the tire radial direction.

The tire 1 includes grip areas 4a, 4b in regions A1, A2, divided by the tire equator CL, on both sides of the tread surface 2. In the grip areas 4a, 4b, a plurality of recessed lines 3a, 3b, with a shape recessed toward the inner side of the tire from an outline of the tread surface 2, extend from the tread edge TE side in a direction inclined relative to the tire equator CL and are arrayed in parallel. The shapes of the recessed lines 3a, 3b are described in detail below, using the recessed line 3a as a typical example.

As illustrated in FIG. 2A, the recessed line 3a has a shape that is recessed toward the inner side of the tire more than an outline O1 of the tread surface 2, that is, the line along the tread surface 2 when the recessed portion is omitted in a cross-sectional view in the tread width direction. The recessed shape is not particularly limited, but in the illustrated example, the recessed shape is a curved shape recessed from the outline O1, and a plurality of recessed lines 3a are arranged in parallel to yield a waveform.

In FIG. 1A, the recessed lines 3a are illustrated by solid lines to indicate the extended shape.

The cross-sectional shape of the recessed lines 3a is not limited to the example illustrated in FIG. 2A, but rather can be appropriately modified. For example, a form with rectangular openings from the outline O1, as illustrated in FIG. 2B, can be adopted.

When an athlete directly touches the grip area 4a of the tire 1 with the hand during pushing, braking, etc. of the competition wheelchair, the plurality of recessed lines 3a arrayed in the grip area 4a come into contact with the hand. When the plurality of recessed lines 3a come into contact with the surface of the hand, friction is generated between the recessed lines 3a and the hand to provide grip. At this time, since the recessed lines 3a have a shape that is recessed from the outline O1 of the tread surface 2, the surface of the hand and fingers is not pushed or strongly contacted by a component protruding from the outline O1 of the tread surface 2. The grip can thus be enhanced without injuring the hands of the athlete.

Here, it is essential for the recessed lines 3a to extend in a direction inclined relative to the tire equator CL. That is, forward and backward movements in the front-back direction are mainly performed, particularly in ball games such as tennis, and the direction of input of force by the hand is also in the front-back direction. Therefore, the formation of the recessed lines 3a in a direction that crosses the front-back direction, i.e., a direction that is inclined relative to the tire equator CL, can achieve a gripping force between the tire 1 and the hand.

The inclination angle of the recessed lines 3a relative to the tire equator CL is not particularly limited, but an acute angle θ1 formed between the recessed lines 3a and the tire equator CL is preferably 30° or more. By the acute angle θ1 being 30° or more, a better grip can be achieved for a hand performing movements in the front-back direction. The recessed lines 3a may extend in a direction orthogonal to the tire equator CL.

An acute angle θ2 formed between the recessed lines 3b and the tire equator CL is preferably the same as the acute angle θ2 but may differ. The recessed lines 3b as well may extend in a direction orthogonal to the tire equator CL. Furthermore, the recessed lines 3a, 3b may extend in directions exhibiting line symmetry with respect to the tire equator CL, with the tire equator CL as an axis of symmetry.

Furthermore, the recessed lines 3a start from the tread edge TE side, i.e., from the region adjacent to the tread edge TE. When the athlete directly touches the tire 1 with the hand, the hand mainly touches the region adjacent to the tread edge TE. That is, when the athlete is pushing or braking the competition wheelchair, the athlete touches the region adjacent to the tread edge TE on the side closer to the athlete's body to rotate the tire 1. Therefore, by the recessed lines 3a being arranged in the region adjacent to the tread edge, the grip between the hand and the tread surface 2 can be improved.

The recessed lines 3a preferably have a starting point at a position between 7.0% and 33.0% of a length WD along the periphery of the tread surface 2 in the width direction from the tread edge TE, and the starting point is more preferably located at the tread edge TE. This is because the region where the input of force by the athlete's hand is particularly strong tends to be located here.

A length W1 in the tread width direction, along the periphery of the tread surface 2, of the grip area 4a in which the recessed lines 3a are arrayed is preferably between 7.0% and 33.0% of the length WD of the tread surface 2 in the width direction. By the ratio W1/WD being set to 7.0% or more, the grip for the athlete's hand can be sufficiently enhanced, and by the ratio W1/WD being set to 33.0% or less, the rigidity of the tread surface 2 can be maintained.

Furthermore, it is essential for the tire 1 to include the grip area 4a, in which the recessed lines 3a are arrayed, along the entire circumference of the tread surface 2, so that a good grip can be obtained regardless of which part, in the tire circumferential direction, of the rolling tire is contacted by the athlete's hand.

The depth d1 of the recessed lines 3a is not particularly limited but is preferably between 0.5 mm and 2.0 mm. By the depth d1 being set to 0.5 mm or more, the grip for the hand can be sufficiently enhanced, and by the depth d1 being set to 2.0 mm or less, the rigidity of the tread surface 2 can be maintained.

Furthermore, an opening width w10 of the recessed lines 3a is not particularly limited but is preferably between 0.5 mm and 2.0 mm. Here, the opening width w10 of the recessed lines 3a refers to the opening length orthogonal to the extending direction of the recessed lines 3a on the outline O1. By the opening width w10 being set to 0.5 mm or more, the grip for the hand can be further improved, and by the opening width w10 being set to 2.0 mm or less, the rigidity of the tread surface 2 can be maintained, while also preventing foreign matter such as sand from entering the recessed lines 3a and damaging the inside of the recessed lines 3a or injuring the hands of the athlete.

The interval between recessed lines 3a is preferably from 0 mm to 3.0 mm or less. The interval refers to the shortest distance between adjacent recessed lines 3a. In the example illustrated in FIG. 2A, the recessed lines 3a are arranged without spacing, i.e., with an interval of 0 mm. When the sidewalls of the recessed lines 3a extend along the tire radial direction, as illustrated in FIG. 2B, the recessed lines 3a are preferably arranged with a spacing of 0.5 mm to 3.0 mm to prevent adjacent recessed lines 3a from integrating, while providing sufficient grip for the hand.

By the grip areas 4a, 4b being arranged in respective regions A1, A2 on both sides, divided by the tire equator CL, the grip of the tire 1 for the hand can be enhanced regardless of the mounting direction of the tire. That is, as described above, when the athlete is pushing or braking the competition wheelchair, the athlete touches the region adjacent to the tread edge TE on the side closer to the athlete's body to rotate the tire 1. The side closer to the athlete's body is determined by the mounting direction of the tire, but grip for the hand can be provided regardless of the direction in which the tire is mounted. In general, a competition wheelchair tire is mounted with a negative camber to facilitate turning motions. With this type of mounting, one of the regions A1, A2 is mainly in contact with the contact patch, and wear tends to occur in the region on the side in contact with the contact patch. After wear has progressed in one of the regions A1, A2, the tire 1 is often remounted in the opposite mounting direction. Therefore, by the grip areas 4a or 4b being provided in both regions A1, A2, grip can be provided both before and after remounting.

Next, the tire 1 includes recessed portions 5a, 5b respectively in the regions A1, A2, defined by two lines, extending radially toward the grip area 4a or 4b from a point positioned in the direction of the grip area 4a or 4b from the tire equator CL, and a line connecting the tips of the two lines.

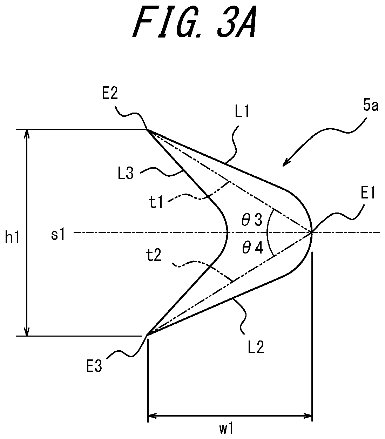

FIG. 3A is an enlarged view of the recessed portion 5a of FIG. 1. The shape of the recessed portions 5a, 5b is described below taking the recessed portion 5a as a representative example. In the region A1, two lines L1 and L2 each curve and extend radially towards the grip area 4a from a point E1 positioned in the direction of the grip area 4a from the tire equator CL. Furthermore, tips E2 and E3 on the grip area 4a side of the lines L1 and L2 are connected by a curved line L3, and the recessed portion 5a is formed by the lines L1 and L2 and the line L3. The recessed portion 5a is shaped to be open from the point E1 towards the grip area 4a side by including the two radially extending lines.

According to the above configuration, the tire 1 can be provided with high drainage performance. That is, forward and backward movements are mainly performed with competition wheelchairs, particularly in tennis. At this time, the tread surface 2 comes into contact with the contact patch mainly at the tire equator CL and the region adjacent to the tire equator CL. If the contact patch with which the tread surface 2 comes into contact is wet, then as the tire 1 rotates, moisture in the contact patch is taken into the recessed portion 5a from the tire equator CL side and discharged in a radial shape towards the tread edge TE. The drainage performance is thereby improved, and slipping of the tire 1 can be prevented. The concave portion 5a has a linearly symmetrical shape with respect to an axis of symmetry s1, which is a line segment along the tread width direction from the point E1. The linearly symmetrical shape with respect to the axis of symmetry s1 along the tread width direction facilitates the drainage of water from the tire equator CL side to the tread edge TE side, but the shape need not be linearly symmetrical.

The distance r1 in the tread width direction between the tire equator CL and the point E1 of the recessed portion 5a is preferably a distance, from the tire equator CL in the tread width direction, that is in a range of 5% to 15% of the length WD in the width direction along the periphery of the tread surface 2. As described above, since the region centered on the tire equator CL tends to have a higher ground contact pressure with the contact patch, especially during forward and backward movements, the drainage performance can be more efficiently enhanced by placement of the recessed portion 5a in this range.

A maximum length w1 of the recessed portion 5a, in the width direction along the periphery of the tread surface 2, is preferably between 7.0% and 33.0% of the length WD of the tread surface 2 in the width direction. By the ratio w1/WD being set to 7.0% or more, moisture in the contact patch can be sufficiently taken in, and by the ratio w1/WD being set to 33.0% or less, the tread surface 2 can sufficiently grip the contact patch.

More specifically, the maximum length w1 of the recessed portion 5a in the width direction is preferably 1.0 mm to 5.0 mm. By the maximum length w1 in the width direction being set to 1.0 mm or more, moisture in the contact patch can be sufficiently taken in, and by the maximum length w1 being set to 5.0 mm or less, the tread surface 2 can sufficiently grip the contact patch.

The maximum length h1 of the recessed portion 5a in the tread circumferential direction is preferably 1.0 mm to 10.0 mm. By the maximum length h1 in the tread circumferential direction being set to 1.0 mm or more, moisture in the contact patch can be sufficiently taken in, and by the maximum length h1 being set to 10.0 mm or less, the tread surface 2 can sufficiently grip the contact patch.

Inclination angles Θ3 and Θ4, which are acute angles respectively formed between the axis of symmetry s1 and the line segment t1, connecting the point E1 and the tip E2, and the line segment t2, connecting the point E1 and the tip E3, of the recessed portion 5a are preferably 20° to 70°. By the inclination angles Θ3 and Θ4 being set in the aforementioned range, the drainage action from the tire equator CL side towards the tread edge TE side can be promoted.

The inclination angles Θ3 and Θ4 are preferably the same angles but may differ.

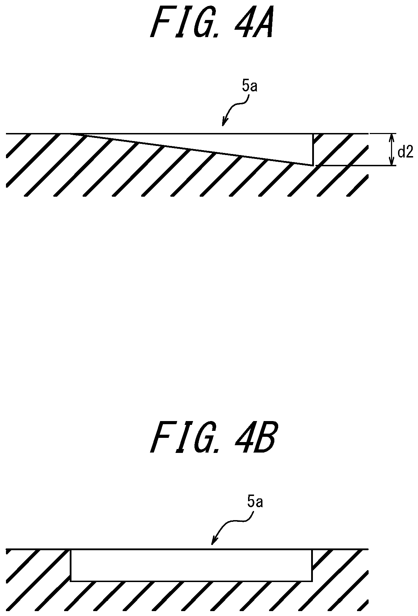

FIG. 4A is a cross-sectional view along the line segment t1 of FIG. 3A. Although the recessed portion 5a may have any shape in the tire radial direction, the depth of the recessed portion 5a in the tire radial direction preferably decreases gradually from the point E1 to the tip E2 for efficient drainage from the tire equator CL side to the tread edge TE side. As illustrated in FIG. 4B, the recessed portion 5a may extend at a constant depth in the tire radial direction from the tire equator CL side to the tread edge TE side or may have a varying depth.

The maximum depth d2 of the recessed portion 5a in the tire radial direction is preferably 0.5 mm to 2.0 mm. By the maximum depth d2 of the recessed portion 5a being set to 0.5 mm or more, moisture in the contact patch can be sufficiently taken into the recessed portion 5a, and by the maximum depth d2 being set to 2.0 mm or less, the durability and rigidity of the tread surface 2 can be maintained.

The recessed portions 5a are preferably arranged at equal intervals over the entire circumference of the tread surface 2. More preferably, 80 to 320 recessed portions are arranged over the entire circumference of the tread surface 2. By the number of recessed portions arranged at equal intervals in the region on one side divided by the tire equator CL being 40 or more, the drainage performance can be further improved, and by the number being 160 or less, the rigidity of the tread surface 2 can be maintained.

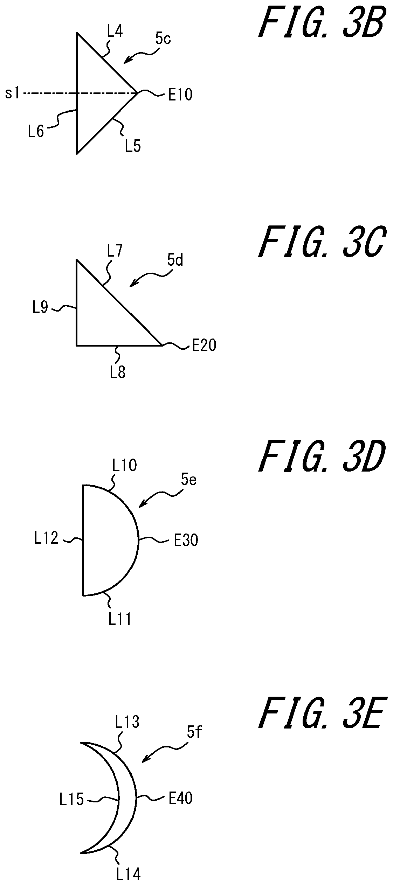

The recessed portion 5a is not limited to the cases illustrated in FIGS. 1 and 3A, but can be appropriately modified in shape, for example to the shapes illustrated in FIGS. 3B to 3E. The recessed portion 5c in FIG. 3B has a triangular shape defined by two sides L4 and L5, extending radially towards the grip area 4a from a point E10, and a side L6 connecting the tips of the two sides, and is linearly symmetrical with respect to a line segment s1 along the tread width direction from the point E10. The recessed portion 5d illustrated in FIG. 3C has a triangular shape defined by a side L7, extending from a point E20 toward the grip area 4a in a direction inclined relative to the tread width direction, a side L8 extending along the tread width direction, and a side L9 connecting the side L7 and the side L8. Furthermore, the recessed portion 5e illustrated in FIG. 3D has a semicircular shape defined by arc-shaped curves L10 and L11 extending radially from a point E30 towards the grip area 4a, and a line segment L12 connecting these curves. The recessed portion 5f illustrated in FIG. 3E has a crescent shape defined by arc-shaped curves L13 and L14 extending radially from a point E40 toward the grip area 4a and an arc-shaped curve L15 connecting these curves.

Both of the regions A1, A2 preferably have a substantially slick surface property, with no unevenness other than the recessed portions 5a, on the tire equator CL side of the grip areas 4a, 4b. According to the above configuration, when the contact patch is dry, the grip with the contact patch can be improved. The recessed portions 5a, 5b can also function as wear indicators for ascertaining the state of wear of the tire 1.

The recessed portions 5a, 5b are preferably arranged to have a phase difference along the tire equator CL between the regions A1, A2. For example, in the present specification, stating that a constituent element X and a constituent element Y "are arranged to have a phase difference along the tire equator CL" may mean that the constituent element X and the constituent element Y "have different positions from each other relative to the tire equator CL". This is to prevent unevenness in the amount of wear in the tread width direction.

### (Second Embodiment)

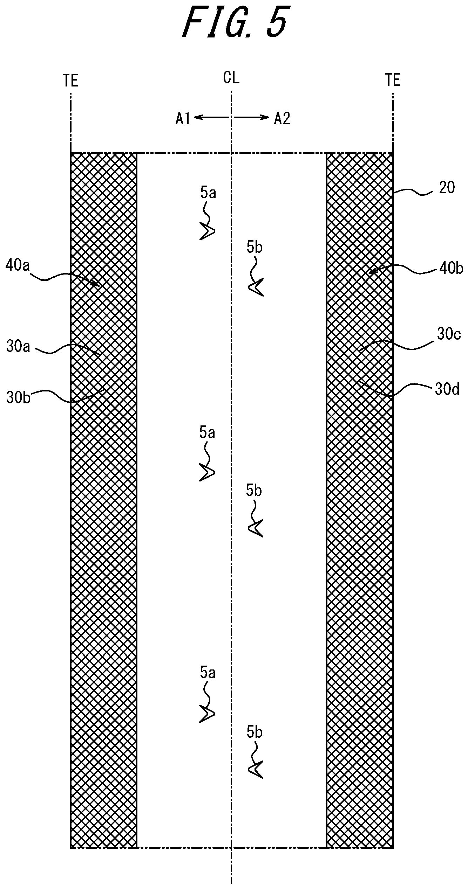

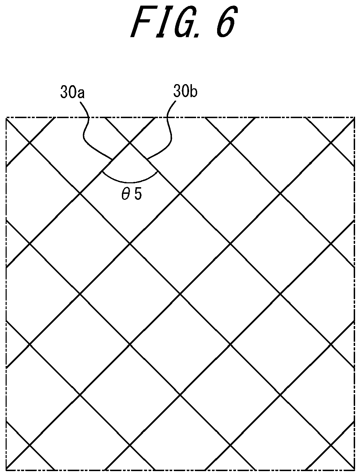

Next, with reference to FIGS. 5 and 6, a tire 10 according to a second embodiment of the present invention will be described. FIG. 5 illustrates a portion of a tread surface 20 of the tire 10 according to the second embodiment of the present invention, developed in the tread width direction, and FIG. 6 is an enlarged view of a portion of a grip area in FIG. 5. In FIGS. 5 and 6, the same constituent elements as in FIG. 1 are denoted by the same reference symbols as in FIG. 1, and a description thereof is omitted.

In FIG. 5, the grip areas 40a and 40b include an array of intersecting recessed lines 30a, 30b and an array of intersecting recessed lines 30c, 30d, respectively, extending in a plurality of directions relative to the tire equator CL. The recessed lines 30a, 30b in the grip area 40a and the recessed lines 30c, 30d in the grip area 40b each have the shape and dimensions of the above-described recessed lines 3a.

The grip areas 40a and 40b are described below, taking the grip area 40a as a representative example. The recessed lines 30a, 30b extend in a plurality of directions and intersect to form a grid-like pattern on the tread surface 2. According to the above configuration, in the grip area 40a, the recessed lines can be arranged at a higher density than when the recessed lines are inclined in a single direction with respect to the tire equator CL. The grip for the hand can thereby be further improved.

Although an angle θ5 between the recessed lines 30a, 30b may be freely determined, the angle θ5 is preferably 90°, i.e., the recessed lines 30a, 30b are preferably orthogonal. By the angle between the recessed lines 30a, 30b being 90°, an acute angle of less than 90° is not formed in any direction. This can prevent the hand from being injured by the corners formed by the recessed lines 30a, 30b.

### (Third Embodiment)

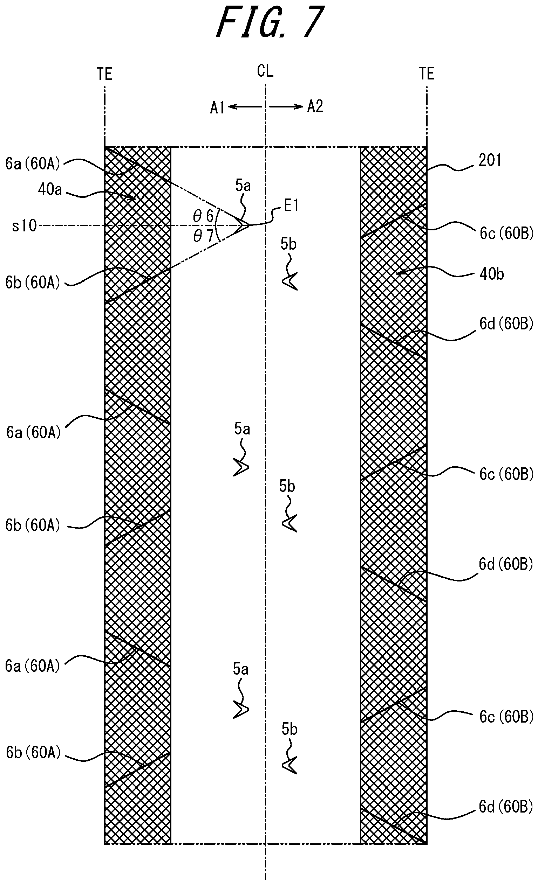

Next, with reference to FIG. 7, a tire 101 according to a third embodiment of the present invention will be described. FIG. 7 illustrates a portion of a tread surface 201 of the tire 101 according to the third embodiment of the present invention, developed in the tread width direction. In FIG. 7, the same constituent elements as in FIGS. 1 and 5 are denoted by the same reference symbols, and a description thereof is omitted.

As illustrated in FIG. 7, the grip areas 40a and 40b include a plurality of sipes 6a, 6b and sipes 6c, 6d, respectively, extending in a direction inclined relative to the tire equator CL. The grip area 40a is described below as a representative example. In the illustrated example, the sipes 6a, 6b extend from the edge of the grip area 40a on the tread edge TE side to the edge on the tire equator CL side.

According to the above configuration, when an athlete sweats during a game or the like, the hand can be prevented from slipping against the tread surface 201. That is, when an athlete sweats during a game or the like, and a film of sweat is present between the fingers or palm and the tread surface, the grip between the hand and the tread surface is hindered, and the hand slips against the tread surface. In the above configuration, however, sipes are provided in the grip area 40a on the tread surface 201. Therefore, when the wet hand of the athlete comes into contact with the grip area 40a, the moisture of the sweat is taken into the sipes 6a, 6b and discharged, as the tire rotates, towards the tread edge TE. The sipes 6a, 6b can thus provide drainage performance to the tire 101 and prevent the hand from sliding against the tread surface 201.

The plurality of sipes 6a, 6b preferably includes a plurality of pairs of linearly symmetrical sipes 60A such that each pair of adjacent sipes 6a, 6b is in a linearly symmetrical relationship with a line segment orthogonal to the tire equator CL, i.e. a line segment along the tread width direction, as an axis of symmetry s10. In the illustrated example, the pairs of linearly symmetrical sipes 60A are formed over the entire circumference of the tread surface 201. Furthermore, in the pairs of linearly symmetrical sipes 60A, each sipe 6a, 6b is preferably inclined to separate from the axis of symmetry s10 from the tire equator CL towards the tread edge TE. According to the above configuration, sweat can also be drained more efficiently from the tire equator CL side towards the tread edge TE side.

Inclination angles θ6 and θ7 of the sipes 6a, 6b relative to the axis of symmetry s10 are preferably between 20° and 70°. According to the above configuration, drainage from the tire equator CL side to the tread edge TE side can be promoted.

An opening width w3 orthogonal to the extending direction of the sipes 6a, 6b is preferably between 2.0 mm and 8.0 mm. By the opening width w3 of the sipes 6a, 6b being set to 2.0 mm or more, the sipes 6a, 6b can be provided with a sufficient drainage function, and by the opening width w3 being set to 8.0 mm or less, the rigidity of the tread surface 201 can be maintained.

A maximum depth d4 of the sipes 6a, 6b is preferably between 0.5 mm and 2.0 mm. By the maximum depth d4 of the sipes 6a, 6b being set to 0.5 mm or more, the sipes 6a, 6b can be provided with a sufficient drainage function, and by the maximum depth d4 being set to 2.0 mm or less, the rigidity of the tread surface 201 can be maintained.

As illustrated in FIG. 7, the point E1 of the recessed portion 5a is preferably located on the axis of symmetry s10 of the pairs of linearly symmetrical sipes 60A. According to this configuration, water that is taken into the recessed portion 5a, and then discharged towards the tread edge TE as the tire rotates, flows to the sipes 6a, 6b, thereby promoting drainage.

Furthermore, when the point E1 is located on the axis of symmetry s10 of the pairs of linearly symmetrical sipes 60A, drainage from the tire equator CL side to the tread edge TE can be further promoted by having the inclination angles θ6 and θ7 of each sipe 6a, 6b relative to the axis of symmetry s10 match the inclination angles Θ3 and Θ4 of the recessed portion 5a.

The pairs of linearly symmetrical sipes 60A are preferably arranged at equal intervals over the entire circumference of the tread surface 201. More preferably, 40 to 160 pairs are arranged at equal intervals over the entire circumference of the tread surface 201 in the region A1. By the number of pairs of linearly symmetrical sipes 60A arranged in the region on one side divided by the tire equator CL being 40 or more, the drainage performance can be further improved, and by the number being 160 or less, the rigidity of the tread surface 201 can be maintained.

From the perspective of uniformity and of even wear in the tread width direction, the pairs of linearly symmetrical sipes 60A formed in the grip area 40a and pairs of linearly symmetrical sipes 60B formed in the grip area 40b are preferably arranged to have a phase difference along the tire equator CL between the regions A1, A2.

### (Fourth Embodiment)

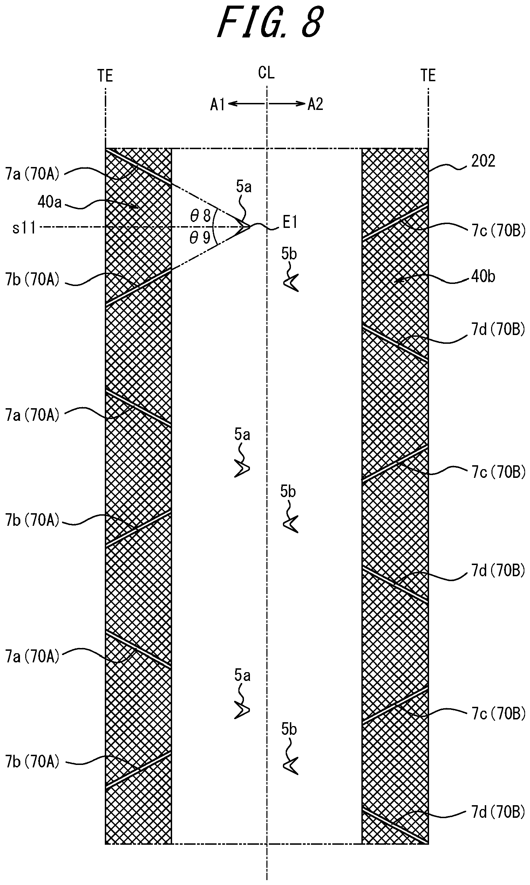

Next, with reference to FIG. 8, a tire 102 according to a fourth embodiment of the present invention will be described. FIG. 8 illustrates a portion of a tread surface 202 of the tire 102 according to the fourth embodiment of the present invention, developed in the tread width direction. In FIG. 8, the same constituent elements as in FIGS. 1, 5, and 7 are denoted by the same reference symbols, and a description thereof is omitted.

As illustrated in FIG. 8, instead of the sipes 6a, 6b in the tire 101 according to the third embodiment, the tire 102 is provided with width direction grooves 7a, 7b having an opening width larger than that of the sipes 6a, 6b. Width direction grooves 7c, 7d are also provided in the grip area 40b instead of the sipes 6c, 6d. Like the sipes 6a, 6b, the width directional grooves 7a, 7b extend in the tire width direction and extend from the edge of the grip area 40a on the tread edge TE side to the edge on the tire equator CL side. In the illustrated example, the width direction grooves 7a, 7b are inclined relative to the tire width direction.

Unless otherwise noted below, the width direction grooves 7a, 7b can have a similar configuration to that of the sipes 6a, 6b.

Taking the width direction groove 7a as a representative example of the width direction grooves 7a, 7b, an opening width w4 orthogonal to the extending direction of the width direction groove 7a is preferably between 0.5 mm and 5.0 mm. By the opening width w4 being set to 0.5 mm or more, sufficient drainage performance can be provided even during a period when athletes perspire more, such as in midsummer, and by the opening width w4 being set to 5.0 mm or less, a reduction in the rigidity of the tread surface 202 can be suppressed.

Furthermore, the depth d5 of the width direction groove 7a in the tire radial direction is preferably 0.5 mm to 2.0 mm. By the depth d5 of the width direction groove 7a being set to 0.5 mm or more, the tire 102 can be provided with high drainage performance, and by the depth d5 being set to 2.0 mm or less, a reduction in the rigidity of the tread surface 202 can be suppressed.

The width direction grooves 7a, 7b preferably include a plurality of pairs of linearly symmetrical width direction grooves 70A such that each pair of adjacent width direction grooves 7a, 7b is in a linearly symmetrical relationship with a line segment orthogonal to the tire equator CL, i.e. a line segment along the tread width direction, as an axis of symmetry s 11. The linearly symmetrical width direction grooves 70A can have a similar configuration to that of the pairs of linearly symmetrical sipes 60A.

### REFERENCE SIGNS LIST

1, 10, 101, 102 Tire
2, 20, 201, 202 Tread surface
3a, 3b, 3c, 3d, 30a, 30b Recessed line
4a, 4b, 40a, 40b Grip area
5a, 5b, 5c, 5d, 5e, 5f Recessed portion
6a, 6b, 6c, 6d Sipe
60A, 60B Pair of linearly symmetrical sipes
7a, 7b Width direction groove
70A, 70B Pair of linearly symmetrical width direction grooves
CL Tire equator
TE Tread edge
A1, A2 Region
O1 Outline
E1, E10, E20, E30, E40 Point
t1, t2 Line segment
L1, L2, L3 Line
L4, L5, L6 Side
L7, L8, L9 Side
L10, L11 Curve
L12 Line segment
L13, L14, L15 Curve
s1, s2, s10 Axis of symmetry

## Claims

1. A competition wheelchair tire comprising:
in regions (A1, A2), divided by a tire equator (CL), on both sides of a tread surface (2, 20, 201, 202) of the tire,
a grip area (4a, 4b, 40a, 40b) along an entire circumference of a tread, the grip area (4a, 4b, 40a, 40b) including a plurality of recessed lines (3a, 3b, 30a-30d), with a shape recessed toward an inner side of the tire from an outline of the tread surface (2, 20, 201, 202), that extend from a tread edge side in a direction inclined relative to the tire equator (CL) and are arrayed in parallel; and
in each region (A1, A2), a recessed portion (5a-5f) defined by two lines (L1, L2, L4, L5, L7, L8, L10, L11, L13, L14), extending radially towards the grip area (4a, 4b, 40a, 40b) from a point (E1, E10, E20, E30, E40) positioned in a direction of the grip area (4a, 4b, 40a, 40b) from the tire equator (CL), and a line (L3, L6, L9, L12, L15) connecting tips of the two lines.

2. The competition wheelchair tire of claim 1, wherein the grip area (40a, 40b) includes an array of intersecting recessed lines (30a-30d) extending in a plurality of directions relative to the tire equator (CL).

3. The competition wheelchair tire of claim 1 or 2, wherein the grip area (40a, 40b) includes a plurality of sipes (6a-6d) extending in a direction inclined relative to the tire equator (CL).

4. The competition wheelchair tire of claim 3, wherein
the plurality of sipes (6a-6d) includes a plurality of pairs of linearly symmetrical sipes (60A, 60B) such that each pair of adjacent sipes (6a-6d) is in a linearly symmetrical relationship with a line segment orthogonal to the tire equator (CL) as an axis of symmetry (s10), and
each sipe (6a-6d) in the pairs of linearly symmetrical sipes (60A, 60B) is inclined to separate from the axis of symmetry (s10) from the tire equator (CL) towards the tread edge (TE).

5. The competition wheelchair tire of claim 4, wherein the pairs of linearly symmetrical sipes (60A, 60B) are arranged to have a phase difference along the tire equator (CL) between the regions (A1, A2).

## Patentansprüche

1. Wettkampf-Rollstuhlreifen, der Folgendes umfasst:
in Bereichen (A1, A2), die durch einen Reifenäquator (CL) geteilt werden, auf beiden Seiten einer Lauffläche (2, 20, 201, 202) des Reifens,
eine Griffigkeitsfläche (4a, 4b, 40a, 40b) entlang eines gesamten Umfangs einer Lauffläche, wobei die Griffigkeitsfläche (4a, 4b, 40a, 40b) eine Vielzahl von vertieften Linien (3a, 3b, 30a-30d), mit einer Form, die zu einer inneren Seite des Reifens hin von einem Umriss der Lauffläche (2, 20, 201, 202) aus vertieft ist, einschließt, die sich von einer Laufflächenkantenseite aus in einer Richtung, die im Verhältnis zu dem Reifenäquator (CL) geneigt ist, erstrecken und parallel angeordnet sind; und,
in jedem Bereich (A1, A2), einen vertieften Abschnitt (5a-5f), der durch zwei Linien (L1, L2, L4, L5, L7, L8, L10, L11, L13, L14), die sich in Radialrichtung zu der Griffigkeitsfläche (4a, 4b, 40a, 40b) hin von einem Punkt (E1, E10, E20, E30, E40) aus, der in einer Richtung der Griffigkeitsfläche (4a, 4b, 40a, 40b) von dem Reifenäquator (CL) aus positioniert ist, erstrecken, und eine Linie (L3, L6, L9, L12, L15), die Spitzen der zwei Linien verbindet, definiert wird.

2. Wettkampf-Rollstuhlreifen nach Anspruch 1, wobei die Griffigkeitsfläche (40a, 40b) eine Anordnung von einander schneidenden vertieften Linien (30a-30d) einschließt, die sich in einer Vielzahl von Richtungen im Verhältnis zu dem Reifenäquator (CL) erstrecken.

3. Wettkampf-Rollstuhlreifen nach Anspruch 1 oder 2, wobei die Griffigkeitsfläche (40a, 40b) eine Vielzahl von Lamellen (6a-6d) einschließt, die sich in einer Richtung erstrecken, die im Verhältnis zu dem Reifenäquator (CL) geneigt ist.

4. Wettkampf-Rollstuhlreifen nach Anspruch 3, wobei
die Vielzahl von Lamellen (6a-6d) eine Vielzahl von Paaren von linear symmetrischen Lamellen (60A, 60B) derart einschließt, dass sich jedes Paar von benachbarten Lamellen (6a-6d) in einem linear symmetrischen Verhältnis mit einem Liniensegment orthogonal zu dem Reifenäquator (CL) als eine Symmetrieachse (s10) befindet, und
jede Lamelle (6a-6d) in den Paaren von linear symmetrischen Lamellen (60A, 60B) von dem Reifenäquator (CL) zu der Laufflächenkante (TE) hin geneigt ist, um sich von der Symmetrieachse (s10) zu trennen.

5. Wettkampf-Rollstuhlreifen nach Anspruch 4, wobei die Paare von linear symmetrischen Lamellen (60A, 60B) so angeordnet sind, dass sie eine Phasendifferenz entlang des Reifenäquators (CL) zwischen den Bereichen (A1, A2) aufweisen.

## Revendications

1. Pneumatique de fauteuil roulant de compétition, comprenant :
dans des régions (A1, A2), divisées par un équateur de pneumatique (CL), sur les deux côtés d'une surface de bande de roulement (2, 20, 201, 202) du pneumatique,
une zone de prise en main (4a, 4b, 40a, 40b), le long d'une circonférence entière d'une bande de roulement, la zone de prise en main (4a, 4b, 40a, 40b) incluant une pluralité de lignes évidées (3a, 3b, 30a-30d), avec une forme évidée vers un côté interne du pneumatique, à partir d'un contour de la surface de bande de roulement (2, 20, 201, 202), qui s'étendent à partir d'un côté de bord de bande de roulement dans une direction inclinée par rapport à l'équateur de pneumatique (CL) et sont agencées en parallèle ; et
dans chaque région (A1, A2), une partie évidée (5a-5f) définie par deux lignes (L1, L2, L4, L5, L7, L8, L10, L 11, L13, L14) s'étendant radialement vers la zone de prise en main (4a, 4b, 40a, 40b) à partir d'un point (E1, E10, E20, E30, E40) positionné dans une direction de la zone de prise en main (4a, 4b, 40a, 40b) par rapport à l'équateur de pneumatique (CL), et une ligne (L3, L6, L9, L12, L15) connectant des pointes des deux lignes.

2. Pneumatique de fauteuil roulant de compétition selon la revendication 1, dans lequel la zone de prise en main (40a, 40b) inclut un réseau de lignes évidées à intersection (30a-30d) s'étendant dans une pluralité de directions par rapport à l'équateur de pneumatique (CL).

3. Pneumatique de fauteuil roulant de compétition selon la revendication 1 ou 2, dans lequel la zone de prise en main (40a, 40b) inclut une pluralité de lamelles (6a-6d) s'étendant dans une direction inclinée par rapport à l'équateur de pneumatique (CL).

4. Pneumatique de fauteuil roulant de compétition selon la revendication 3, dans lequel
la pluralité de lamelles (6a,-6d) inclut une pluralité de paires de lamelles linéairement symétriques (60A, 60B), de sorte que chaque paire de lamelles adjacentes (6a-6d) est en relation linéairement symétrique avec un segment de ligne orthogonal à l'équateur de pneumatique (CL), en tant qu'axe de symétrie (s10), et
chaque lamelle (6a-6d) dans les paires de lamelles linéairement symétriques (60A, 60B) est inclinée pour établir une séparation de l'axe de symétrie (s10), à partir de l'équateur de pneumatique (CL) vers le bord de bande de roulement (TE).

5. Pneumatique de fauteuil roulant de compétition selon la revendication 4, dans lequel les paires de lamelles linéairement symétriques (60A, 60B) sont agencées de sorte à avoir une différence de phase le long de l'équateur de pneumatique (CL), entre les régions (A1, A2).
